# FASCICULE DE BREVET EUROPEEN

(11) **EP 3 870 481 B1**
(45) Date de publication et mention de la délivrance du brevet: **31.07.2024**
(21) Numéro de dépôt: 19787297.1
(22) Date de dépôt: 22.10.2019
(51) Int. Cl.: B60R 13/02, F16B 19/02, F16B 5/02

(54) **DISPOSITIF DE REALIGNEMENT VERTICAL**
VORRICHTUNG ZUR VERTIKALEN NEUAUSRICHTUNG
VERTICAL REALIGNMENT DEVICE

(30) Priorité: 22.10.2018 FR 1871259
(43) Date de publication de la demande: 01.09.2021
(73) Titulaire: Renault s.a.s, 92100 Boulogne Billancourt (FR)
(72) Inventeur: BOUILLON, Jean-Charles, 78940 LA QUEUE LEZ YVELINES (FR); CHABASSOL, Ludovic, 28210 COULOMBS (FR)
(74) Mandataire: Renault Group
(86) Numéro de dépôt international: PCT/EP2019/078714
(87) Numéro de publication internationale: WO 2020/083903

(56) Documents cités:
- WO-A1-2017/089748
- DE-A1- 102007 058 755
- DE-A1- 102011 113 179
- DE-A1- 102012 105 575
- DE-A1- 102015 013 882
- DE-U1- 8 024 841
- US-A1- 2018 022 296

## Description

L'invention concerne le domaine des portières automobiles et plus particulièrement la position de la garniture sur la dite portière par rapport à la planche de bord.

Aujourd'hui, la planche de bord présente des lignes qui se poursuivent sur la garniture de portière, il est donc nécessaire d'être sûr de sa géométrique pour éviter un défaut visible entre les deux portières avant et la planche de bord. Il est donc important d'avoir un réglage suffisamment précis. Chaque pièce constituant la portière et la planche de bord présente des tolérances de fabrication et lorsqu'on les monte ces tolérances peuvent s'additionner et entraîner des décalages plus ou moins important entre les éléments montés. D'autre part, le montage de la garniture sur le caisson de la portière est réalisé avant le montage de la portière sur la caisse du véhicule. Le montage en géométrie des portières est fait par rapport à la caisse et en priorisant les jeux extérieurs vus par le client car c'est ce qu'il voit en premier quand il fait le tour du véhicule en concession. L'intérieur où est placée la garniture peut alors présenter un écart important qui donne une impression de manque de finition au client. Cet écart est d'autant plus visible quand il y a un décor avec changement de couleur, un décrochement vertical de la ligne est immédiatement identifiable.

Un moyen de réglage selon l'art antérieur est connu de DE 10 2011 1131 79 A.

Un but de la présente invention est de répondre aux inconvénients du document de l'art antérieur mentionné ci-dessus et en particulier, de proposer un excentrique, une portière et un procédé permettant de régler la hauteur de la garniture une fois cette portière montée sur la caisse du véhicule en fin de chaîne.

Pour cela, un premier aspect de l'invention concerne un excentrique comprenant une première pièce fixe et une deuxième pièce rotative disposée dans la première pièce fixe, la deuxième pièce rotative ayant d'un côté une empreinte creuse d'axe A et de l'autre une pointe cylindrique d'axe B, les axes A et B étant parallèles et distants d'une distance d non nulle, la deuxième pièce rotative comprenant deux bras opposés caractérisé en ce que chacun des bras est pourvu de deux dents à une extrémité et coopère avec des crans disposés sur la première pièce fixe et que l'extrémité des bras est déformable élastiquement. L'excentrique peut ainsi être tourné avec un outil tel qu'un outil "torx" et permettre ainsi un réglage en hauteur lorsqu'il est placé dans la garniture de portière, tout en ne dépassant pas de la garniture. L'extrémité déformable élastiquement des bras permet libérer les dents des crans par pression et de les bloquer sur un cran automatiquement par retour au repos de l'extrémité et, par-là, bloquer la rotation de la deuxième pièce dans la position désirée.

Avantageusement, la distance d est égale à 3mm. Cette distance de 3 mm permet un réglage en hauteur de ±2mm de la garniture.

Avantageusement, la deuxième pièce rotative est monobloc et comprend un joint d'étanchéité. Le joint d'étanchéité est ainsi solidaire de la pièce rotative et permet de garantir l'étanchéité au bruit de l'excentrique sur le caisson de porte quand elle est montée.

Avantageusement, la déformation élastique du bras est obtenue par un évidement traversant disposé à l'extrémité. Cet évidement donne un effet ressort à l'extrémité du bras.

Avantageusement, les crans de la pièce fixe sont disposés de part et d'autre de la pièce rotative avec un pas d'un mm, un côté mesurant de 0 à ±2mm et l'autre côté de ±0,5 à ±1,5mm. La rotation de la deuxième pièce peut ainsi être faite avec un pas de 0,5mm, la fixation des dents sur les crans se faisant d'un côté pour les millimètres entiers et de l'autre pour les demi-millimètres.

Selon un deuxième aspect, l'invention concerne une portière automobile comprenant une garniture avec un trou avant de fixation disposés en partie haute à proximité d'une zone de finition à régler avec la planche de bord et un trou de fixation en partie arrière, un caisson de portière avec des trous équipés d'une molaire rainurée destinée à recevoir une vis de fixation, cette vis de fixation reliant la garniture au caisson par ladite molaire de fixation, elle est caractérisée en ce que le caisson comprend une boutonnière disposée dans un coin haut et avant de la portière et en vis-à-vis d'un trou cylindrique d'une pièce intermédiaire de la garniture dans laquelle est insérée un excentrique avec au moins une des caractéristiques précédentes. La position de l'excentrique à l'avant de la portière permet de redresser ou de descendre l'avant de la garniture de façon à l'aligner sur la planche de bord. Le réglage par crans permet d'avoir une homogénéité dans le réglage et de gagner du temps d'exécution quel que soit l'opérateur sur la chaîne de montage.

Avantageusement, le trou avant de fixation oblong est de 8mm d'axe à axe et de diamètre 16mm. Cela permet de pouvoir positionner plus ou moins haut la garniture sur le caisson.

Avantageusement, le trou avant de fixation est à 50mm de la boutonnière. La proximité du trou de fixation de la boutonnière permet un réglage plus précis et facilite le travail de l'opérateur.

Avantageusement, la portière comprend un obturateur. L'obturateur permet de cacher la zone de réglage et de fixation de la vue du client.

Selon un troisième aspect, l'invention concerne un procédé de réglage en hauteur d'une garniture de portière automobile sur un caisson, il est caractérisé en ce qu'il comprend les étapes suivantes:
- retirer une vis de fixation d'un trou avant de fixation de la garniture dans un coin haut et avant du caisson,
- tourner un excentrique avec au moins une des caractéristiques précédentes, d'une valeur multiple d'un demi-millimètre,
- revisser la vis de fixation.
Ce procédé permet un réglage simple et homogène des caissons quel que soit l'opérateur.

Avantageusement, le procédé comprend une étape de démontage d'un obturateur couvrant la vis avant de fixation et une étape de remontage dudit obturateur.

Avantageusement, l'excentrique fait bouger la garniture de ±2mm. La plage de réglage permet d'aligner la planche de bord avec le caisson sans qu'un défaut apparaisse au niveau de la fenêtre de la portière.

Avantageusement, le procédé comprend une étape de vérification de l'ajustement de la hauteur de la garniture par rapport à une planche de bord en fermant la portière. Une fois un premier réglage effectué, l'opérateur ferme la portière pour vérifier l'alignement du caisson avec la planche de bord, si celui est bon, le réglage est terminé sinon, il recommence l'opération.

L'invention porte également sur un véhicule automobile comprenant deux portières avec au moins une des caractéristiques précédentes.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[Fig. 1] représente une vue d'un mauvais raccord entre la planche de bord et la garniture de porte ;
[Fig. 2] est une vue intérieure d'une portière;

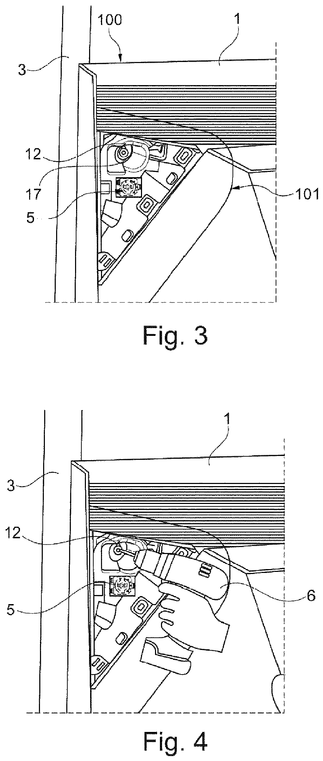

[Fig.3] est une vue intérieure d'un détail de la portière;
[Fig. 4] montre l'étape de dévissage de la garniture selon procédé;
[Fig.5] est une vue de face de la pièce rotative d'une excentrique selon l'invention;
[Fig.6] est une vue de dos de la pièce rotative de la figure 5;
[Fig.7] est une vue de face de la pièce fixe d'une excentrique selon l'invention;
[Fig. 8] est une perspective de la pièce fixe de la figure 7;

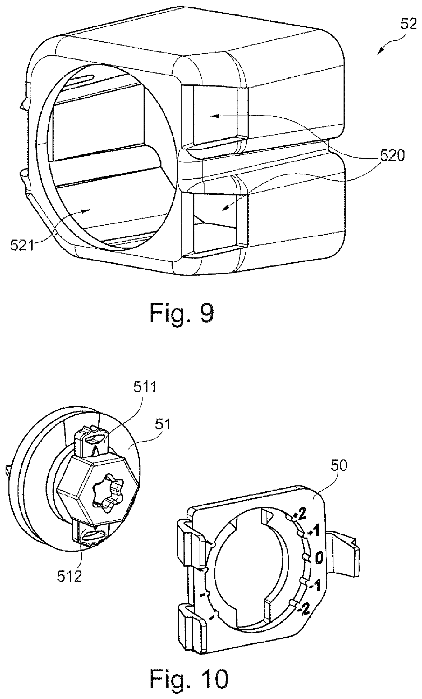

[Fig. 9] est une perspective d'une pièce d'interface;
[Fig. 10] illustre le montage de la pièce rotative sur la pièce fixe;

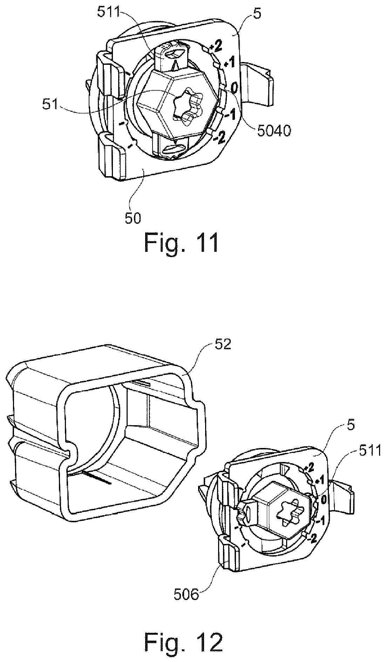

[Fig. 11] illustre la mise à zéro de la pièce rotative sur la pièce fixe;
[Fig. 12] illustre le montage de l'excentrique sur la pièce d'interface;
[Fig. 13] illustre le montage de l'ensemble de la figure 12 sur le caisson de la portière;
[Fig. 14] montre le réglage de la hauteur par l'excentrique;

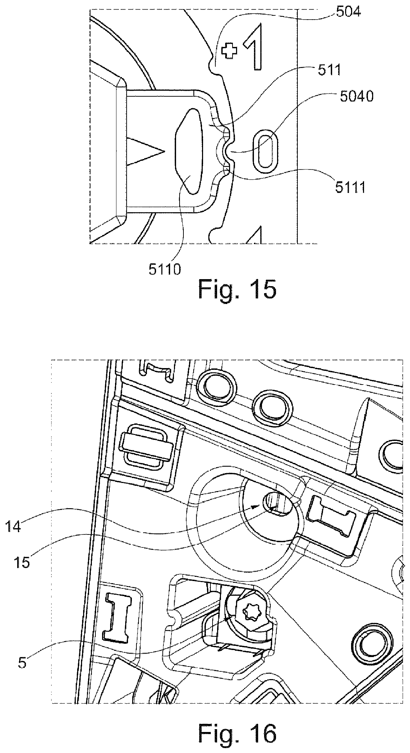

[Fig. 15] est le détail du blocage du bras de la pièce rotative sur la pièce fixe.
[Fig. 16] est une vue de détail du mécanisme de réglage avec la molaire de fixation.

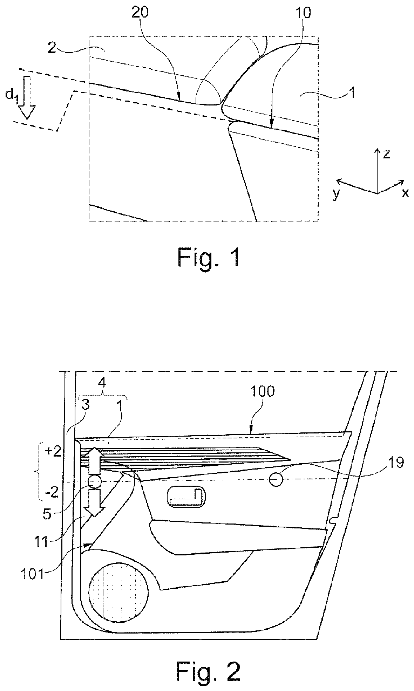

On considérera dans la suite de la description que l'avant correspond à l'avant du véhicule et l'arrière à l'arrière dudit véhicule. De la même façon, le haut correspond au haut du véhicule et l'intérieur à l'intérieur du véhicule. De façon conventionnelle, un décalage vertical sera considéré comme un défaut Z selon l'axe Z, un décalage en profondeur ou un espace entre la garniture et la planche de bord comme un défaut X+Y selon les axes X et Y, tels qu'illustrés figure 1. Seul le défaut Z est considéré.

On voit sur la figure 1 que lorsque la garniture 1 est montée sur le caisson 3 de la portière 4 et que la portière 4 est fermée, la ligne 20 de la planche de bord 2 et la ligne 10 de la garniture 1 ne sont pas toujours alignées, on constate ici un décalage d₁ en Z de plusieurs millimètres vers le bas.

La garniture 1 est positionnée selon une direction verticale sur le caisson 3 de la portière par deux doigts 5 et 19 se logeant dans un premier trou 13 et un deuxième trou (non visible sur les figures).Ces doigts sont placés entre 50 et 160mm du haut 100 de la garniture 1. Le doigt 5 est équipé d'un système d'excentrique. Le doigt arrière 19 quant à lui reste fixe et sert d'axe de rotation de la garniture 1 pour la baisser ou la relever à l'avant afin de l'aligner sur la planche de bord 2 quand le réglage est fait avec le doigt 5 équipé du système d'excentrique.

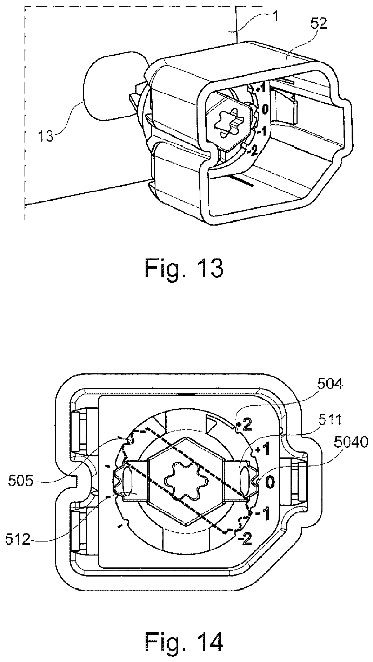

La garniture 1 comprend un obturateur 11 démontable qui couvre une vis avant 12 vissée dans un trou de fixation 14 et une molaire 15 logée dans une boutonnière 13 (cf. figure 13). Cet obturateur 11 est placé à l'intérieur d'une ligne 101 de recouvrement de la planche de bord 2 sur la garniture 1 quand la portière 4 est fermée. Toute cette zone 101 n'est donc pas visible en position de conduite et n'altère pas l'esthétique de l'habitacle. Le trou de fixation 14 est disposé dans un renfoncement 17 de la garniture 1. Dans l'exemple illustré un excentrique 5, d'axe de rotation A, est placé à proximité et en dessous du trou de fixation 14.

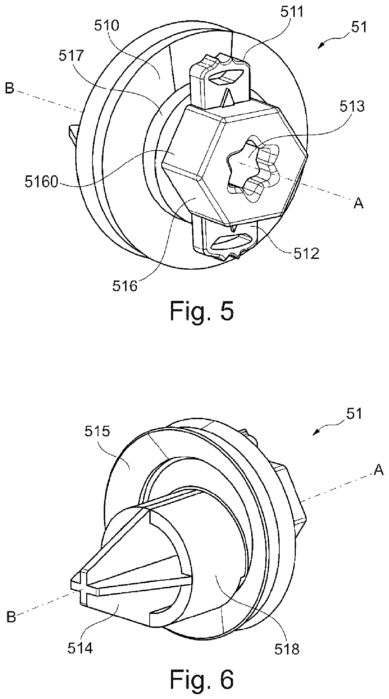

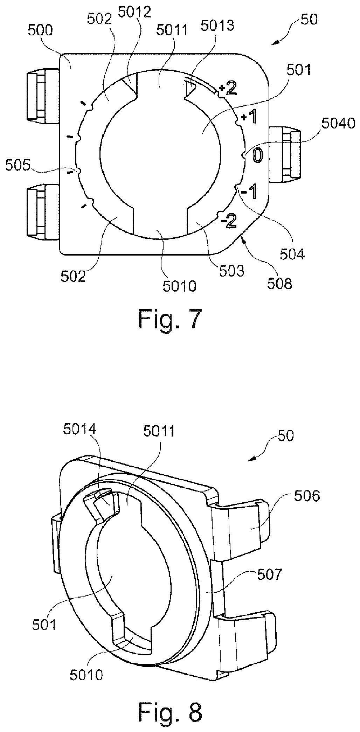

L'excentrique 5 comprend une première pièce fixe 50 (figures 7 et 8) et une deuxième pièce rotative 51 (figures 5 et 6). On considérera que la face avant de l'excentrique est orientée vers l'intérieur du véhicule en position montée sur la portière.

La deuxième pièce rotative 51 présente sur sa face avant 510 (cf. figure 5) un évidement 513 destiné à recevoir un outil, dans cet exemple une empreinte "torx" et deux bras 511 et 512 disposés de part et d'autre d'un axe de rotation A. L'évidement 513 est dans une excroissance 516 de la face avant 510, cette excroissance 516 comprend des pans coupés 5160, ici 6 qui peuvent servir pour tourner la pièce rotative 51 avec une clé à pipe. Une forme cylindrique 517 est disposée entre la face avant 510 et l'excroissance 516.

Sur sa face arrière (cf. figure 6), l'excentrique 5 comporte une pointe conique 514 située dans le prolongement d'un cylindre 518 d'axe B décalé d'une distance d par rapport à l'axe A. Dans l'exemple illustré la pointe conique 514 a une section en forme de croix afin de faciliter sa fabrication. Un joint 515 est placé sur la périphérie de la pièce rotative 51 et est solidaire de la pièce rotative 51.

La première pièce fixe 50 comprend un trou cylindrique 501 bordé sur sa face avant 500 de deux surfaces planes 502 et 503, chaque surface 502 et 503 est pourvue de crans 504 et 505 en relief répartis avec un pas de 15°. Le trou cylindrique 501 est ouvert par deux encoches 5010 et 5011 diamétralement opposées. Une des encoches, ici l'encoche 5011 du haut présente de part et d'autre sur la face avant 500, deux butées 5012 et 5013. Un des deux coté 5014 de l'encoche est affiné, jusqu'à 1mm d'épaisseur, et séparé de la face support 503 sur sa longueur pour lui donner de la souplesse et permettre sa déformation élastique pour laisser passer la pièce rotative 51. Le trou cylindrique 501 est de diamètre et d'épaisseur sensiblement égaux à la forme de cylindrique 517 afin de pouvoir la recevoir.

La pièce fixe 50 se prolonge à l'arrière par une surface cylindrique 507 coaxiale au trou cylindrique 501.

La première pièce fixe 50 comprend également des clips 506 de part et d'autre afin de pouvoir être clipsée sur une interface 53. Dans l'exemple illustré, ils sont au nombre de 3. La pièce fixe 50 est biseautée sur un coté 508 pour faciliter son montage sans erreur sur la garniture 1, comme détrompeur.

La pièce intermédiaire 52 comprend trois ouvertures latérales 520 coopérant avec les clips 506 de la pièce fixe 50 et un trou cylindrique 521 destiné à recevoir la surface cylindrique 507 de la pièce fixe 50. La pièce intermédiaire 52 a un profil complémentaire de la pièce fixe 50. Cette interface 52 n'est, de préférence, pas une pièce indépendante rajoutée mais une zone technique prédéfinie ajouté lors de la conception de la garniture de portière ou à une pièce de structure prévue dans la zone souhaitée de la garniture.

L'excentrique 5 se monte de la façon suivante:
- les deux bras 511 et 512 sont chacun disposés en vis-à-vis d'une des encoches 5010 et 5011,
- la pièce rotative 51 est insérée dans la pièce fixe jusqu'à ce que la surface avant 510 entre en contact avec la surface cylindrique 507,
- la pièce rotative 51 est tournée vers le coté 5014 qui va se déformer pour laisser passer le bras (ici 511) au-dessus de la butée 5013 et va servir de rampe d'engagement,
- le bras (ici 511) est tourné jusqu'au cran 5040 correspondant à la position 0.

L'excentrique 5 est ensuite montée sur la pièce intermédiaire 52 par clipsage de façon connue. Cet ensemble est ensuite positionné verticalement sur le caisson 3 par une boutonnière 13. La boutonnière 13 est de préférence de forme oblongue horizontale.

Le réglage de l'excentrique 5 se fait à partir de la position 0, illustré figure 14. Les variations par millimètre se fait sur le bras 511 tandis que les variations au 0,5mm se fait avec le bras 512. Ainsi si on veut monter ou descendre la garniture d'un millimètre on bloque le bras 511 sur un cran 504, si on veut la monter au descendre d'une valeur au demi millimètre (position en traits pointillés sur la figure 14) près on bloque le bras 512 sur un cran 505. Les butées 5012 et 5013 limitent la rotation de l'excentrique 5, et éviter à la deuxième pièce rotative 51 de sortir de la pièce fixe 50.

On voit sur le détail de la figure 5 que chaque bras (ici 511) est pourvu de deux dents 5111 formant une fourchette et permettant le blocage du bras 51 sur le cran 504 (ici le cran de position nulle 5040). Le bras 511 est percé derrière les dents 5111 d'un trou 5110 allongé pour autoriser la déformation élastique de l'extrémité du bras 511 et permettre le blocage et le déblocage des dents 5111 des crans 504. De la même façon, le bras 512 est équipé de deux dents 5111 et percé d'un trou 5110 permettant le blocage et le déblocage des dents des crans 505. En effet, pour que le changement de cran se fasse de façon fluide et sans dégradation des crans en particulier si elles sont en plastique, on constitue une lame de ressort en créant le trou 5110 lors de l'injection de la pièce rotative 51. On peut aussi combiner des matières tels que du PP 6-6 ou POM avec différentes forme de trou 5110.

Nous allons maintenant décrire le réglage de la garniture 1 sur la portière 4. Lorsque l'opérateur constate, porte fermée, un décalage en Z entre la garniture 1 et la planche de bord 2, il ouvre la portière, retire l'obturateur 11 s'il y en a un, dévisse la vis avant 12, introduit un outil tel qu'une clé à pipe sur les pans 5160, par exemple un outil "torx" dans l'évidement 513 de l'excentrique 5 ou sur les pans 5160. Il fait tourner l'excentrique en + ou - selon s'il veut faire remonter la partie avant de la garniture 1, ou la faire descendre. Une fois le niveau souhaité atteint, l'opérateur revisse la vis avant 12. Il referme ensuite la portière 4 pour s'assurer que la planche de bord est bien alignée avec la garniture 1. Si ce n'est pas le cas, il recommence l'opération jusqu'à obtenir l'alignement désiré. S'il existe, il remonte ensuite l'obturateur 11.

L'invention permet un réglage homogène de la pièce de garniture quel que soit l'opérateur.
On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Excentrique (5) comprenant une première pièce fixe (50) et une deuxième pièce rotative (51) disposée dans la première pièce fixe (50), la deuxième pièce rotative (51) ayant d'un côté une empreinte creuse (513) d'axe A et de l'autre une pointe cylindrique (514) d'axe B, les axes A et B étant parallèles et distants d'une distance d non nulle, la deuxième pièce rotative (51) comprenant deux bras (511, 512) opposés, **caractérisé en ce que** chacun des bras est pourvu de deux dents (5111) à une extrémité et coopère avec des crans (504, 505) disposés sur la première pièce fixe (50) et que l'extrémité des bras (511, 512) est déformable élastiquement.

2. Excentrique (5) selon la revendication 1 **caractérisée en ce que** la distance d est égale à 3mm.

3. Excentrique (5) selon une des revendications 1 ou 2, **caractérisée en ce que** la deuxième pièce rotative (51) est monobloc et comprend un joint d'étanchéité (515).

4. Excentrique (5) selon une des revendications précédentes **caractérisées en ce que** la déformation élastique du bras (511, 512) est obtenue par un évidement (5110) traversant disposé à l'extrémité.

5. Excentrique (5) selon une des revendications précédentes **caractérisées en ce que** les crans (504, 505) de la pièce fixe (50) sont disposés de part et d'autre de la pièce rotative avec un pas d'un mm, un côté mesurant de 0 à ±2mm et l'autre côté de ±0,5 à ±1,5mm.

6. Portière (4) automobile comprenant une garniture (1) avec un trou avant de fixation (14) disposés en partie haute à proximité d'une zone de finition à régler avec une planche de bord et un trou de fixation en partie arrière, un caisson (3) de portière avec des trous équipés d'une molaire rainurée (15) destinée à recevoir une vis de fixation, cette vis de fixation (12) reliant la garniture (1) au caisson (3) par ladite molaire (15) de fixation, **caractérisée en ce que** le caisson (3) comprend une boutonnière (13) disposée dans un coin haut et avant de la portière (4) et en vis-à-vis d'un trou cylindrique (521) d'une pièce intermédiaire (52) de la garniture (1) dans laquelle est insérée un excentrique (5) selon une des revendications précédentes.

7. Portière (4) automobile selon la revendication précédente, **caractérisée en ce que** le trou avant de fixation (14) oblong est de 8mm d'axe à axe et de diamètre 16mm.

8. Portière (4) automobile selon une des revendications 6 ou 7, **caractérisée en ce que** le trou avant de fixation (14) est à 50mm de la boutonnière (13).

9. Portière (4) automobile selon une des revendications 6 à 8, **caractérisée en ce qu'**elle comprend un obturateur (11).

10. Procédé de réglage en hauteur d'une garniture (1) de portière automobile sur un caisson (3), **caractérisé en ce qu'**il comprend les étapes suivantes:
- retirer une vis de fixation (12) d'un trou avant (14) de fixation de la garniture (1) dans un coin haut et avant du caisson (3),
- tourner un excentrique selon une des revendications 1 à 5, d'une valeur multiple d'un demi-millimètre,
- revisser la vis de fixation (12a).

11. Procédé selon la revendication précédente, **caractérisé en ce qu'**il comprend une étape de démontage d'un obturateur (11) couvrant la vis avant de fixation (12) et une étape de remontage dudit obturateur (11).

12. Procédé selon un des revendications 10 ou 11, **caractérisé en ce que** l'excentrique fait bouger la garniture (1) de ±2mm.

13. Procédé selon un des revendications 10 à 12, **caractérisé en ce qu'**il comprend une étape de vérification de l'ajustement de la hauteur de la garniture (1) par rapport à une planche de bord (2) en fermant la portière (4).

14. Véhicule automobile comprenant deux portières (4) selon une des revendications 6 à 9.

## Patentansprüche

1. Exzenter (5), der ein erstes, festes Teil (50) und ein zweites, drehbares Teil (51), das im ersten, festen Teil (50) angeordnet ist, umfasst, wobei das zweite, drehbare Teil (51) auf einer Seite eine hohle Aufnahme (513) einer Achse A und auf der anderen eine zylinderförmige Spitze (514) einer Achse B aufweist, wobei die Achsen A und B parallel und um einen Abstand d ungleich null beabstandet sind, wobei das zweite, drehbare Teil (51) zwei gegenüberliegende Arme (511, 512) umfasst, **dadurch gekennzeichnet, dass** jeder der Arme an einem Ende mit zwei Zähnen (5111) versehen ist und mit Rasterhebungen (504, 505) zusammenwirkt, die auf dem ersten, festen Teil (50) angeordnet sind, und dass das Ende der Arme (511, 512) elastisch verformbar ist.

2. Exzenter (5) nach Anspruch 1, **dadurch gekennzeichnet, dass** der Abstand d gleich 3 mm ist.

3. Exzenter (5) nach einem der Ansprüche 1 oder 2, **dadurch gekennzeichnet, dass** das zweite, drehbare Teil (51) einstückig ist und eine Dichtung (515) umfasst.

4. Exzenter (5) nach einem der vorhergehenden Ansprüche, **dadurch gekennzeichnet, dass** die elastische Verformung des Arms (511, 512) durch eine durchgehende Ausnehmung (5110) erzielt wird, die am Ende angeordnet ist.

5. Exzenter (5) nach einem der vorhergehenden Ansprüche, **dadurch gekennzeichnet, dass** die Rasterhebungen (504, 505) des festen Teils (50) beiderseits des drehbaren Teils mit einem Abstand von einem mm angeordnet sind, wobei eine Seite von 0 bis ±2 mm misst und die andere Seite von ±0,5 ä ±1,5 mm.

6. Autotür (4) umfassend eine Verkleidung (1) mit einem vorderen Befestigungsloch (14), die im oberen Abschnitt in der Nähe eines Endverarbeitungsbereichs angeordnet ist, der mit einem Armaturenbrett zu verstellen ist, und einem Befestigungsloch im hinteren Abschnitt, einen Türkasten (3) mit Löchern, die mit einem gerillten Molaren (15) ausgestattet sind, der dazu bestimmt ist, eine Befestigungsschraube aufzunehmen, wobei diese Befestigungsschraube (12) die Verkleidung (1) durch den Befestigungsmolaren (15) mit dem Kasten (3) verbindet, **dadurch gekennzeichnet, dass** der Kasten (3) eine Öffnung (13) umfasst, die in einer oberen und vorderen Ecke der Tür (4) und gegenüber einem zylinderförmigen Loch (521) eines Zwischenteils (52) der Verkleidung (1) angeordnet ist, in das ein Exzenter (5) nach einem der vorhergehenden Ansprüche eingesetzt ist.

7. Autotür (4) nach dem vorhergehenden Anspruch, **dadurch gekennzeichnet, dass** das längliche vordere Befestigungsloch (14) von Achse zu Achse 8 mm ist und einen Durchmesser von 16 mm aufweist.

8. Autotür (4) nach einem der Ansprüche 6 oder 7,**dadurch gekennzeichnet, dass** das vordere Befestigungsloch (14) 50 mm von der Öffnung (13) entfernt ist.

9. Autotür (4) nach einem der Ansprüche 6 bis 8,**dadurch gekennzeichnet, dass** sie eine Abdeckung (11) umfasst.

10. Verfahren zur Höhenverstellung einer Autotürverkleidung (1) an einem Kasten (3), **dadurch gekennzeichnet, dass** es die folgenden Schritte umfasst:
- Abziehen einer Befestigungsschraube (12) aus einem vorderen Befestigungsloch (14) der Verkleidung (1) in einer oberen und vorderen Ecke des Kastens (3),
- Drehen eines Exzenters nach einem der Ansprüche 1 bis 5 um einen vielfachen Wert eines halben Millimeters,
- Wiederanschrauben der Befestigungsschraube (12a).

11. Verfahren nach dem vorhergehenden Anspruch, **dadurch gekennzeichnet, dass** es einen Schritt des Abmontierens einer Abdeckung (11), die die vordere Befestigungsschraube (12) abdeckt, und einen Schritt des Wiederanmontierens der Abdeckung (11) umfasst.

12. Verfahren nach einem der Ansprüche 10 oder 11, **dadurch gekennzeichnet, dass** der Exzenter die Verkleidung (1) um ±2 mm bewegt.

13. Verfahren nach einem der Ansprüche 10 bis 12, **dadurch gekennzeichnet, dass** es einen Schritt des Überprüfens der Einstellung der Höhe der Verkleidung (1) im Verhältnis zu einem Armaturenbrett (2) durch Schließen der Tür (4) umfasst.

14. Kraftfahrzeug, das zwei Türen (4) nach einem der Ansprüche 6 bis 9 umfasst.

## Claims

1. Eccentric (5) comprising a first, fixed component (50) and a second, rotary component (51) that is disposed in the first, fixed component (50), the second, rotary component (51) having, on one side, a recessed impression (513) of axis A, and, on the other side, a cylindrical point (514) of axis B, the axes A and B being parallel and at a non-zero distance d from one another, the second, rotary component (51) comprising two opposite arms (511, 512), **characterized in that** each of the arms is provided with two teeth (5111) at one end and cooperates with catches (504, 505) disposed on the first, fixed component (50), and **in that** the ends of the arms (511, 512) are elastically deformable.

2. Eccentric (5) according to Claim 1, **characterized in that** the distance d is equal to 3 mm.

3. Eccentric (5) according to either of Claims 1 and 2, **characterized in that** the second, rotary component (51) is in one piece and comprises a seal (515).

4. Eccentric (5) according to one of the preceding claims, **characterized in that** the elastic deformation of the arm (511, 512) is obtained by way of a through-cutout (5110) disposed at the end.

5. Eccentric (5) according to one of the preceding claims, **characterized in that** the catches (504, 505) on the fixed component (50) are disposed on either side of the rotary component with a spacing of one millimetre, one side measuring from 0 to ±2 mm and the other side from ±0.5 to ±1.5 mm.

6. Motor vehicle door (4) comprising a trim (1) with a front fastening hole (14) disposed in the top part in the vicinity of a finishing region to be adjusted relative to a dashboard and a fastening hole in the rear part, a door casing (3) with holes equipped with a grooved block (15) intended to receive a fastening screw, this fastening screw (12) connecting the trim (1) to the casing (3) by way of said fastening block (15), **characterized in that** the casing (3) comprises a buttonhole (13) disposed in a top front corner of the door (4), facing a cylindrical hole (521) in an intermediate component (52) of the trim (1) into which an eccentric (5) according to one of the preceding claims is inserted.

7. Motor vehicle door (4) according to the preceding claim, **characterized in that** the elongate front fastening hole (14) is 8 mm from axis to axis and 16 mm in diameter.

8. Motor vehicle door (4) according to either of Claims 6 and 7, **characterized in that** the front fastening hole (14) is 50 mm from the buttonhole (13).

9. Motor vehicle door (4) according to one of Claims 6 to 8, **characterized in that** it comprises a shutter (11).

10. Method for adjusting the height of a motor vehicle door trim (1) on a casing (3), **characterized in that** it comprises the following steps:
- removing a fastening screw (12) from a front fastening hole (14) in the trim (1) in a top front corner of the casing (3),
- turning an eccentric according to one of Claims 1 to 5 by a value that is a multiple of half a millimetre,
- screwing the fastening screw (12a) back in.

11. Method according to the preceding claim, **characterized in that** it comprises a step of removing a shutter (11) covering the front fastening screw (12) and a step of refitting said shutter (11).

12. Method according to either of Claims 10 and 11, **characterized in that** the eccentric moves the trim (1) by ±2 mm.

13. Method according to one of Claims 10 to 12, **characterized in that** it comprises a step of verifying the adjustment of the height of the trim (1) relative to a dashboard (2) by closing the door (4).

14. Motor vehicle comprising two doors (4) according to one of Claims 6 to 9.
